# EUROPÄISCHE PATENTSCHRIFT

(11) **EP 0 425 850 B1**
(45) Veröffentlichungstag und Bekanntmachung des Hinweises auf die Patenterteilung: **09.03.1994**
(21) Anmeldenummer: 90119359.9
(22) Anmeldetag: 09.10.1990
(51) Int. Cl.: B29C 47/66

(54) **Schneckenwellenmaschine mit zusammengesetztem Gehäuse**
Extruder with a modular cylinder
Dispositif à vis ayant un cylindre modulaire

(30) Priorität: 30.10.1989 DE 3936085
(43) Veröffentlichungstag der Anmeldung: 08.05.1991
(73) Patentinhaber: Blach, Josef A., D-71732 Tamm (DE)
(72) Erfinder: Blach, Josef A., D-71732 Tamm (DE)
(74) Vertreter: Bögl, Wolfgang, Dipl.-Ing.

(56) Entgegenhaltungen:
- EP-A- 0 334 163
- DE-A- 2 423 785
- DE-A- 2 500 883

## Beschreibung

Die Erfindung betrifft eine Schneckenwellenmaschine mit einem aus in Längsrichtung aneinandergesetzten Gehäuseabschnitten bestehenden , zusammengesetzten Gehäuse, bei dem die Gehäuseabschnitte einen im wesentlichen rechteckigen Außenquerschnitt aufweisen und im Inneren mit Längsbohrungen für die Aufnahme der Schnecke versehen sind.

Eine solche Schneckenwellenmaschine ist bekannt (DE - A - 33 47 537). Das Gehäuse der bekannten Schneckenwellenmaschine besteht aus einer größeren Anzahl von Einzelteilen, welches in der Herstellung kostenaufwendig ist. Für eine große Anzahl der Anwendungsfälle einer Schneckenwellenmaschine ist ein derart aufwendiger Aufbau wie bei der bekannten Schneckenwellenmaschine nicht erforderlich.

Bei der bekannten Schneckenwellenmaschine steht das als Verschleißeinsatz ausgebildete Innengehäuse auf seiner gesamten Länge unter einer hohen mechanischen Vorspannung. Das ist jedoch in den meisten Anwendungsfällen nicht notwendig, weil die stärkste mechanische Beanspruchung eines Gehäuseabschnittes des zusammengesetzten Gehäuse an den Enden der Gehäuseabschnitte auftritt.

Das der Erfindung zugrunde liegende technische Problem besteht deshalb darin, eine Schneckenwellenmaschine der eingangs geschilderten Art zu schaffen, welche aus einer möglichst geringen Anzahl von Einzelteilen mit einfachem geometrischen Aufbau bestehen, so daß eine einfache und kostengünstige Herstellung und Montage erreicht werden kann. Gleichzeitig soll die Schneckenwellenmaschine einen kontrollierbaren Betrieb wegen der Geradheit der Achsen gestatten.

Dieses technische Problem ist erfindungsgemäß dadurch gelöst, daß sämtliche Gehäuseabschnitte stumpf aneinanderstoßend in Längsrichtung aneinander gesetzt und durch mehrere Zuganker verspannt miteinander verbunden sind, auf jedes Ende der Gehäuseabschnitte ein geschlossener Rahmen auf die Seiten der Gehäuseabschnitte einen Preßdruck ausübend aufgeschoben ist und die Rahmen an ihren Schmalseiten horizontal exakt gleitend gelagert sind.

Das neue Gehäuse der Schneckenwellenmaschine besteht aus mehreren , eine einfache Gestalt aufweisenden und daher kostengünstig herzustellenden Einzelteilen. Die für den druckfesten Zusammenbau des Gehäuses vorgesehenen Teile weisen ebenfalls eine unkomplizierte Gestalt auf, und sie weisen solche Abmessungen auf, daß sie nur dort zu montieren sind, wo sie auch erforderlich sind. Dadurch ergibt sich ein wirtschaftlicher Aufbau des Gehäuses.

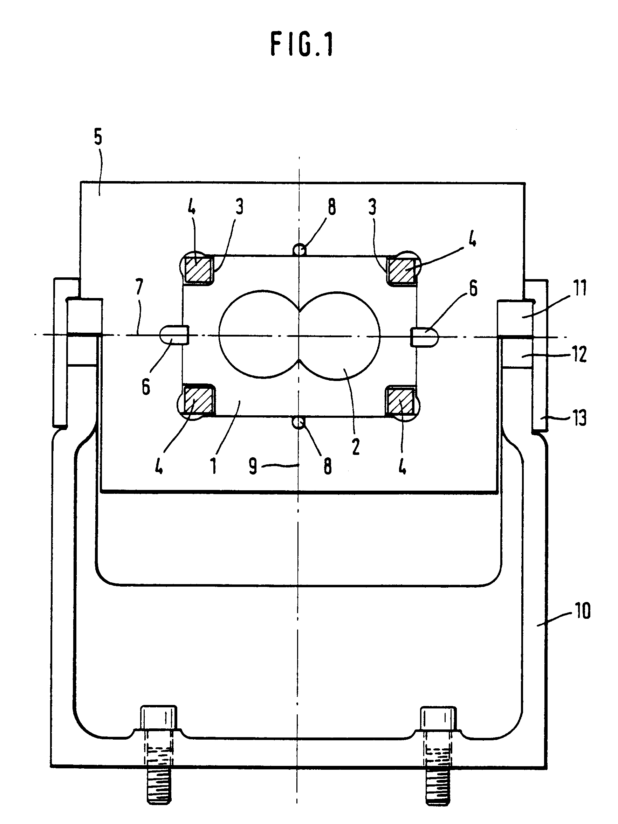

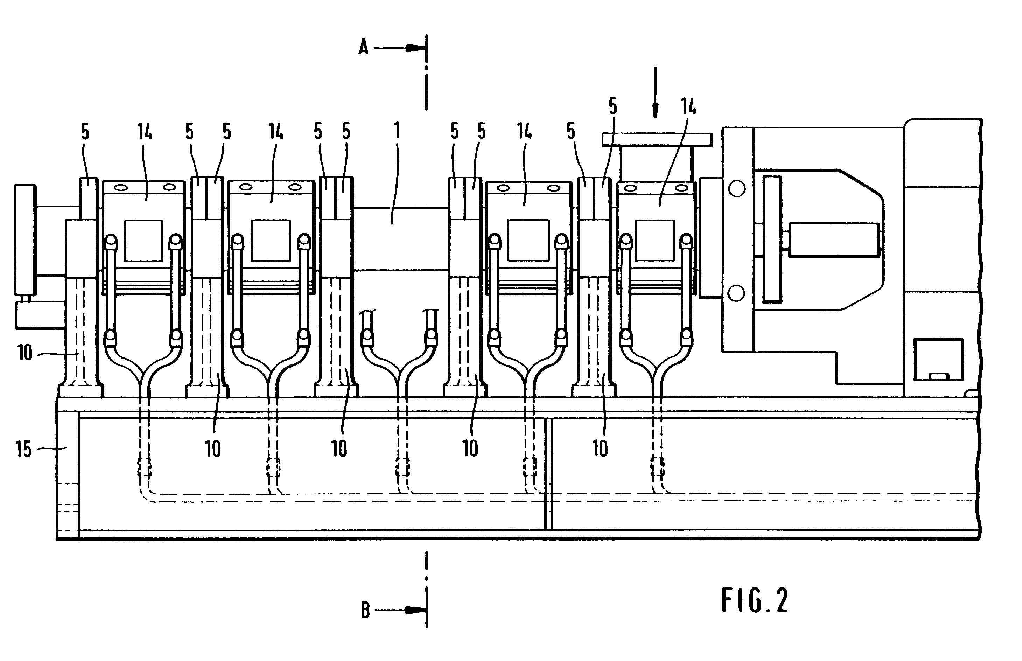

Vorteilhafte Einzelheiten der Erfindung sind in den Ansprüchen 2 bis 7 enthalten. Sie ist nachstehend anhand der Figuren 1 und 2 erläutert. Es zeigen :
- Fig. 1: den Querschnitt durch die Schneckenwellenmaschine gemäß Fig. 2 entlang der Linie AB
und
- Fig. 2: die Seitenansicht der gesamten Schneckenwellenmaschine.

In Fig. 1 ist der im wesentlichen einen rechteckigen Querschnitt aufweisende Gehäuseabschnitt 1 zu erkennen, der im Inneren zwei zueinander parallele, sich überlappende Längsbohrungen 2 aufweist. Die Anzahl der Längsbohrungen 2 macht deutlich, daß es sich um das Gehäuse für eine Doppelschneckenwellenmaschine handelt. Die Längsbohrung im Inneren des Gehäuses kann aber auch anders ausgebildet sein. Der Gehäuseabschnitt 1 kann vollständig aus einem verschleißfesten Werkstoff bestehen. Es ist aber auch möglich, daß auf die Innenkonturoberfläche des Gehäuseabschnittes eine verschleißfeste Schnicht aufgebracht ist oder der Gehäuseabschnitt mit einem verschleißfesten Einsatz versehen ist.

Die einzelnen, das Gehäuse bildenden Gehäuseabschnitte 1 sind an den Stirnflächen stumpfaneinander stoßend zusammengefügt. In den an den Ecken der Gehäuseabschnitte 1 vorgesehenen Aussparungen 3 - bei dem in Fig. 1 gezeigten Ausführungsbeispiel sind es quadratische Aussparungen - sind Zuganker 4 angeordnet, deren Länge größer als die Länge sämtlicher zusammengefügter Gehäuseabschnitte 1 ist. Mit diesen Zugankern 4 sind die Gehäuseabschnitte 1 kraftschlüssig miteinander verbunden, und gleichzeitig wird eine mechanische Vorspannung in axialer Richtung des Gehäuses auf die Gehäuseabschnitte ausgeübt. Das genaue axiale Ausrichten der Gehäuseabschnitte kann dadurch erfolgen, daß die eine Stirnseite des Gehäuseabschnittes mit (nicht gezeigten) Sackbohrungen und die andere Stirnseite des Gehäuseabschnittes mit (nicht gezeigten) Paßstiften, welche mit den Sackbohrungen fluchten, versehen ist.

Bevor die Gehäuseabschnitte zum Gehäuse zusammengefügt werden, ist auf jedes Ende der Gehäuseabschnitte ein geschlossener Rahmen 5, dessen Dicke wesentlich geringer als die Länge des Gehäuseabschnittes ist, aufgeschoben worden. Durch die Rahmen 5 wird auf folgende Weise eine mechanische Spannung auf die Enden der Gehäuseabschnitte ausgeübt : In horizontaler Richtung durch die Keile 6, welche in entsprechenden Nuten im Gehäuseabschnitt und im Rahmen 5 angebracht sind. Diese Nuten liegen auf der zur breitseitigen Außenkante des Rahmens 5 parallelen Mittelinie 7. In vertikaler Richtung wird die mechanische Spannung durch die Klemmstifte 8 erzeugt. Diese Klemmstifte 8 sind ebenfalls in Nuten im Rahmen 5 geführt. Die Stifte 8 haben einen im wesentlichen kreisförmigen Querschnitt. Sie weisen jedoch in Längsrichtung eine keilförmige Gestalt in der Weise auf, daß ihre Oberfläche einseitig keilförmig abgeschliffen ist. Die Nuten für die Klemmstifte 8 liegen auf der zur schmalseitigen Außenkante der Gehäuseabschnitte parallelen Mittelinie 9.

Das aus den Gehäuseabschnitten 1 bestehende Gehäuse ist auf mehreren Gestellen 10 in der Weise gelagert, daß der Rahmen seitlich mit Gleitsteinen 11 versehen ist, welche sich auf Gleitsteinen 12 am Gestell 10 abstützen. Diese Art der Lagerung gestattet eine freie Bewegung zwischen dem Gehäuse und den Gestellen in Längsrichtung der Schneckenwellenmaschine. Über die Gleitsteine 11 und 12 greift die am Gestell 10 befestigte Klammer 13, welche ein vertikales Abheben des Gehäuses verhindert.

In Fig. 2 ist mehr oder weniger schematisch die gesamte Schneckenwellenmaschine gezeigt. Es sind deutlich die Gestelle 10 und die Rahmen 5 zu erkennen. Die meisten Gehäuseabschnitte 1 sind von den sie umgebenden Heizeinrichtungen 14 verdeckt, lediglich im mittleren Teil der Schneckenwellenmaschine ist die Heizeinrichtung weggelassen, so daß der Gehäuseabschnitt 1 sichtbar ist. Die Gestelle 10 sind auf einem Untergestell 15 befestig.

## Patentansprüche

1. Schneckenwellenmaschine mit einem aus in Längsrichtung aneinandergesetzten Gehäuseabschnitten (1) bestehenden, zusammengesetzten Gehäuse, bei dem die Gehäuseabschnitte einen im wesentlichen rechteckigen Außenquerschnitt aufweisen und im Inneren mit Längsbohrungen (2) für die Aufnahme der Schnecke versehen sind,
dadurch gekennzeichnet, daß sämtliche Gehäuseabschnitte (1) stumpf aneinander stoßend in Längsrichtung aneinandergesetzt und durch mehrere Zuganker (4) verspannt miteinander verbunden sind, auf jedes Ende der Gehäuseabschnitte (1) ein geschlossener Rahmen (5) auf die Seiten der Gehäuseabschnitte einen Preßdruck ausübend aufgeschoben ist und die Rahmen (5) an ihren Schmalseiten horizontal exakt gleitend gelagert sind.

2. Schneckenwellenmaschine nach Anspruch 1,
dadurch gekennzeichnet, daß an den Ecken der Gehäuseabschnitte (1) quadratische oder rechteckige Aussparungen (3) vorgesehen sind.

3. Schneckenwellenmaschine nach den Ansprüche 1 und 2,
dadurch gekennzeichnet, daß auf den Schmalseiten der Gehäuseabschnitte und den Schmalseiten der Rahmenöffnung im Bereich der zur breitseitigen Außenkante parallelen Mittellinie (7) miteinander fluchtende, Keile (6) aufnehmende Nuten vorgesehen sind.

4. Schneckenwellenmaschine nach den Ansprüchen 1 bis 3,
dadurch gekennzeichnet, daß auf den Breitseiten der Rahmenöffnung auf der zur schmalseitigen Außenkante der Gehäuseabschnitte parallelen Mittellinie (9) an den Grenzen zu den Gehäuseabschnitten Nuten für die Aufnehme von Klemmstiften (8) vorgesehen sind.

5. Schneckenwellenmaschine nach den Ansprüchen 1 bis 4,
dadurch gekennzeichnet, daß an den beiden Außenkanten des Rahmens (5) im Bereich der zur breitseitigen Außenkante parallelen Mittellinie (7) Gleitsteine (11) angeordnet sind.

6. Schneckenwellenmaschine nach den Ansprüchen 1 bis 5,
dadurch gekennzeichnet, daß jeder Gleitstein (11) auf einem weiteren, am Ende des Schenkels eines Gestelles (10) angeordneten Gleitstein (12) ruht.

7. Schneckenwellenmaschine nach den Ansprüchen 1 bis 6,
dadurch gekennzeichnet, daß die Gleitsteine (11,12) außen von einer am Gestell (10) befestigten Klammer (13) überdeckt sind.

## Claims

1. Worm shaft machine comprising a housing composed of a plurality of housing portions (1) arranged near one another in the longitudinal direction, wherein said housing portions (1) have a substantially rectangular outer cross-section and, in their interior, are provided with longitudinal openings (2) for receiving the worm gear,
**characterized** in that all of said housing portions (1) are arranged in the longitudinal direction in abutment against one another in a flush manner, and are tensionally connected to one another by several tensioning rods (4), and in that a closed frame (5) is slipped on to each end of said housing portions (1) by exerting a pressing force upon the sides of said housing portions, with said frames (5) at their narrow sides being exactly horizontally supported in a sliding manner.

2. A worm shaft machine as claimed in claim 1,
**characterized** in that either square or rectangular holes (3) are provided for at the corners of said housing portions (1).

3. A worm shaft machine as claimed in claims 1 and 2,
**characterized** in that grooves are provided on both the small sides of said housing portions and the small sides of said frame opening for receiving wedges (6) arranged in alignment with one another within the region of said center line (7) extending parallel to said wide-sided outer edge.

4. A worm shaft machine as claimed in claims 1 to 3,
**characterized** in that grooves are provided on the wide sides of said frame opening along said center line (9) extending parallel to the small-side outer edge of said housing portions, for receiving clamping pins (8) at the boundaries to said housing portions.

5. A worm shaft machine as claimed in claims 1 to 4,
**characterized** in that sliding blocks (11) are arranged on both outer edges of said frame (5) within the region of said center line (7) which extends parallel to said wide-sided outer edge.

6. A worm shaft machine as claimed in claims 1 to 5,
**characterized** in that each said sliding block (11) is supported on a further sliding block (12) as arranged at the end of the leg of a support (10).

7. A worm shaft machine as claimed in claims 1 to 6,
**characterized** in that said sliding blocks (11, 12) are covered up on the outside by a clamp (13) mounted on said support (10).

## Revendications

1. Machine à vis sans fin comportant un carter modulaire composé de sections de carter (1) assemblées dans le sens longitudinal, lesquelles sections de carter présentent une section transversale extérieure sensiblement rectangulaire et sont pourvues, à l'intérieur, de perçages longitudinaux (2) destinés à recevoir la vis, caractérisée en ce que toutes les sections de carter (1) sont assemblées bout à bout dans le sens longitudinal et reliées entre elles en étant contraintes par plusieurs tirants d'ancrage (4), un cadre fermé (5) est enfilé sur chaque extrémité des sections de carter (1) en exerçant une compression sur les côtés desdites sections de carter, et les cadres (5) sont montés pour coulisser exactement horizontalement, au niveau de leurs côtés étroits.

2. Machine à vis sans fin selon la revendication 1, caractérisée en ce qu'il est prévu, au niveau des coins des sections de carter (1), des évidements (3) carrés ou rectangulaires.

3. Machine à vis sans fin selon les revendications 1 et 2, caractérisée en ce qu'il est prévu, sur les côtés étroits des sections de carter et sur les côtés étroits de l'ouverture des cadres, dans la zone de la ligne médiane (7) parallèle au bord extérieur du côté large, des rainures dans l'alignement les unes des autres qui reçoivent des coins (6).

4. Machine à vis sans fin selon les revendications 1 à 3, caractérisée en ce qu'il est prévu, sur les côtés larges de l'ouverture des cadres, sur la ligne médiane (9) parallèle au bord extérieur du côté étroit des sections de carter, aux limites des sections de carter, des rainures destinées à recevoir des goupilles de serrage (8).

5. Machine à vis sans fin selon les revendications 1 à 4, caractérisée en ce que des coulisseaux (11) sont disposés au niveau des deux bords extérieurs du cadre (5), dans la zone de la ligne médiane (7) parallèle au bord extérieur du côté large.

6. Machine à vis sans fin selon les revendications 1 à 5, caractérisée en ce que chaque coulisseau (11) repose sur un second coulisseau (12) disposé à l'extrémité de la branche d'un châssis (10).

7. Machine à vis sans fin selon les revendications 1 à 6, caractérisée en ce que les coulisseaux (11, 12) sont couverts, à l'extérieur, par un crampon (13) fixé au châssis (10).
